# EUROPEAN PATENT SPECIFICATION

(11) **EP 2 779 319 B1**
(45) Date of publication and mention of the grant of the patent: **16.10.2019**
(21) Application number: 14159514.0
(22) Date of filing: 13.03.2014
(51) Int. Cl.: H01R 13/52, H01R 24/58, H01R 43/00, H01R 13/504, H01R 13/74

(54) **Waterproof Ear Jack Socket and Method of Manufacturing the same**
Wasserdichte Kopfhörersteckbuchse und Herstellungsverfahren dafür
Prise de jack d'écoute imperméable à l'eau et son procédé de fabrication

(30) Priority: 14.03.2013 KR 20130027171
(43) Date of publication of application: 17.09.2014
(73) Proprietor: Samsung Electronics Co., Ltd., Suwon-si Gyeonggi-do 443-742 (KR)
(72) Inventor: Cheong, Hyunmi, 443-742 Gyeonggi-do (KR); Jeong, Uyhyeon, 443-742 Gyeonggi-do (KR); Kim, Jaeshik, 443-742 Gyeonggi-do (KR); Bae, Kwangjin, 443-742 Gyeonggi-do (KR)
(74) Representative: HGF Limited

(56) References cited:
- CN-A- 102 469 723
- CN-U- 202 585 916
- CN-U- 202 633 641
- CN-U- 202 737 215
- JP-A- 2006 123 458
- JP-A- 2012 014 863
- US-A1- 2011 195 611
- US-A1- 2012 125 942
- US-A1- 2012 156 907

## Description

### TECHNICAL FIELD

The present disclosure relates to a waterproof ear jack socket and a method of manufacturing the same, and more particularly, to a waterproof ear jack socket that is provided with a waterproof function to prevent water from penetrating into a portable terminal, and a method of manufacturing the same.

### BACKGROUND

A portable terminal refers to a device carried by a user, and provides a communication function, an electronic note function, a multimedia function, and a broadcast receiving function.

Such a portable terminal generally includes various sockets and connectors for connection to an external speaker and an earphone, connection to an external device such as a personal computer, and mounting of a memory or a SIM card.

The sockets or connectors are generally exposed to the outside as a user connects an earphone or an interface connector to the sockets or connectors if necessary, and include separate covers so that foreign substances cannot be introduced through the sockets or connectors.

Meanwhile, as portable terminals are commonly used, a waterproof function of the portable terminals is gradually gaining interest. Users of portable terminals generally purchase separate waterproof bags if necessary. That is, as long as the waterproof function of portable terminals is not required in everyday lives, users of the portable terminals prevent water penetration of the portable terminals by using waterproof bags only when entering specific facilities. Meanwhile, mountain climbers, soldiers, and people who enjoy aquatic sports or skiing need the waterproof function of portable terminals more.

This is because such users are generally easily exposed to sudden weather changes or bad situations, such that water may possibly penetrate into the portable terminals.

CN 202 737 215 U discloses an audio frequency socket connector comprising a main body part and a shielding housing. The insulator body group comprises an insulator body and a plurality of contact terminals inserted in the insulator bodies.

JP 2012 014863 A discloses an audio jack connector including an insulation body, a plurality of terminals, a bottom case and a seal case. A bottom wall of the insulation body has a plurality of terminal grooves into which the terminals, which have solder pins, are inserted.

CN 202 633 641 U discloses an audio socket connector having an insulating body, a plurality of terminals, a waterproof board and a waterproof pedestal.

### SUMMARY

To address the above-discussed deficiencies, it is a primary object to provide an ear jack socket that prevents water penetration into a portable terminal and a method of manufacturing the same.

Various respective aspects and features of the invention are defined in the appended claims.

The features and technical advantages of the present disclosure will be somewhat widely described so that those skilled in the art to which the present disclosure pertains can easily understand the contents of the present disclosure from a detailed description of the present disclosure. In addition to the features and advantages, the additional features and technical advantages defining the subject of the claims of the present disclosure will be understood more clearly from the detailed description of the present disclosure.

According to a first aspect of the present invention there is provided a waterproof ear jack socket for a portable terminal comprising: an upper socket having at least one slit formed to allow passage of a first portion of a contact terminal through one surface of the upper socket to be exposed to the outside wherein the at least one slit has an appropriate size for attachment to and engagement with the contact terminal; a lower socket having a recess configured to engage a second portion of the contact terminal on one surface thereof facing the upper socket, the lower socket being coupled to the upper socket to form a plug insertion hole into which an ear jack plug can be inserted, wherein the upper socket and the lower socket define separate parts of the entrance portion of the plug insertion hole; and a waterproof cover formed by insert injection molding around a socket body formed by bonding the upper socket and the lower socket and configured to prevent the socket body from being contaminated or damaged by an external environment; wherein the waterproof cover has a convex portion formed to protrude by a predetermined height at a circumference adjacent to an entrance portion of the plug insertion hole and wherein the convex portion is configured to attach to an inner wall of a terminal by a resilient force and is formed of a resilient material.

According to a second aspect of the present invention there is provided a method of manufacturing a waterproof ear jack socket for a portable terminal, the method comprising: individually injection molding an upper socket and a lower socket for forming a socket body having a plug insertion hole into which an ear jack plug is to be inserted, wherein the upper socket and the lower socket define separate parts of the entrance portion of the plug insertion hole; forming at least one slit on one surface of the upper socket such that a first portion of a contact terminal passes through the surface of the upper socket to be exposed to the outside wherein the at least one slit has an appropriate size for attachment to and engagement with the contact terminal and forming a recess for engaging an second portion of the contact terminal on one surface of the lower socket facing the upper socket; assembling the contact terminal such that the first portion of the contact terminal is inserted into the slit and the second portion of the contact terminal is engaged with the recess; bonding the upper socket and the lower socket to form the socket body; and inserting injection molding around the socket body to form a waterproof cover having a convex portion formed to protrude by a predetermined height at a circumference adjacent to an entrance portion of the plug insertion hole and configured to prevent the socket body from being contaminated or damaged by an external environment.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 schematically illustrates a structure of a general ear jack socket;
FIG. 2 illustrates schematic views of a structure of a separable socket body of an ear jack socket for a portable terminal in accordance with embodiments of the present disclosure;
FIG. 3 illustrates perspective views of a process of coupling the separable socket body of the ear jack socket for a portable terminal in accordance with embodiments of the present disclosure;
FIG. 4 schematically illustrates a structure in which a waterproof cover is injection molded together with the separable socket body of the ear jack socket for a portable terminal in accordance with embodiments of the present disclosure;
FIG. 5 schematically illustrates a waterproof cover according to embodiments of the present disclosure;
FIG. 6 illustrates a structure in which the waterproof cover is bonded to the separable socket body of the ear jack socket for a portable terminal in accordance with embodiments of the present disclosure;
FIG. 7 illustrates a structure of the ear jack socket of FIG. 6 when viewed from the rear side;
FIGS. 8 and 9 schematically illustrate a structure in which the ear jack socket is mounted within a portable terminal in accordance with embodiments of the present disclosure; and
FIG. 10 illustrates a process of manufacturing a waterproof ear jack socket in accordance with embodiments of the present disclosure.

### DETAILED DESCRIPTION

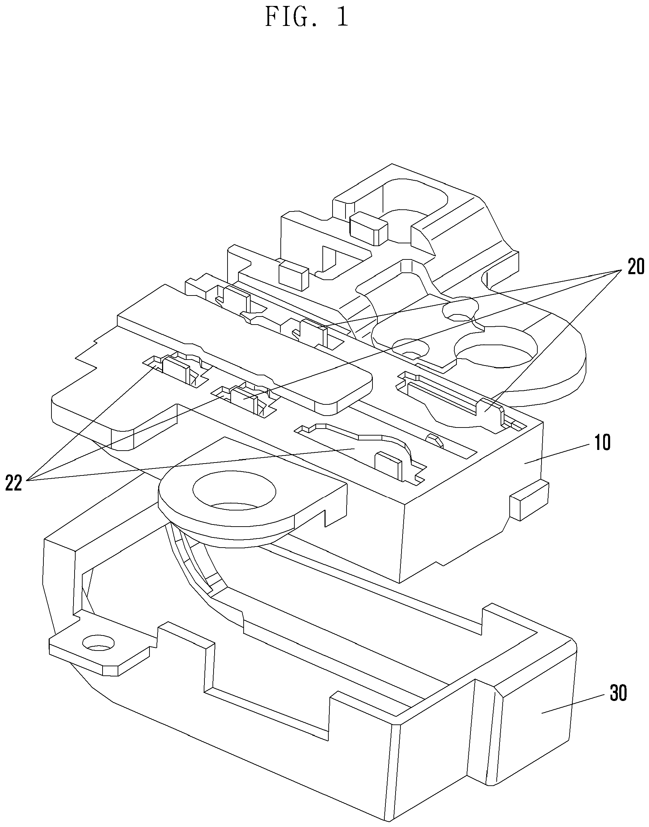

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device. Hereinafter, embodiments of the present disclosure will be described in detail with reference to the accompanying drawings. It is noted that in the drawings, the same elements are provided with the same reference numerals if possible. Further, a detailed description of a configuration of the present disclosure may be omitted herein when it may make the essence of the present disclosure obscure.

In the embodiments of the present disclosure, a portable terminal may apply to all information communication devices and multimedia devices such as a tablet PC, a mobile communication terminal, a mobile phone, a Personal Digital Assistant (PDA), a smart phone, an International Mobile Telecommunication 2000 (IMT-2000) terminal, a Code Division Multiple Access (CDMA) terminal, a Wideband Code Division Multiple Access (WCDMA) terminal, a Global System for Mobile communication (GSM) terminal, a General Packet Radio Service (GPRS) terminal, an Enhanced Data for GSM Evolution (EDGE) terminal, a Universal Mobile Telecommunication Service (UMTS) terminal, a digital broadcasting terminal, and an Automated Teller Machine (ATM), and applications thereof.

FIG. 1 schematically illustrates a structure of a general ear jack socket.

Referring to FIG. 1, the ear jack socket includes an integral socket body 10 into which an ear jack plug (not illustrated) is inserted, contact terminals 20 electrically connecting the plug to a circuit board of the portable terminal, and a cover 30 enclosing the socket body 10.

In the ear jack socket of FIG. 1, the integral socket body 10 should have large holes such that the contact terminals 20 having different shapes and structures at upper and lower sides thereof may be coupled to the socket body 10.

Referring to the exploded view of FIG. 1 illustrating the contact terminal 20, in general, an upper portion 22 of the contact terminal 20 has a small size since it protrudes to the outside of the socket body 10 and contacts the circuit board of the portable terminal, whereas a lower portion 24 of the contact terminal 20 has a relatively large size since it includes a protrusion area facing the plug inserted into the socket body 10 to contact the plug. The size of the contact terminal 20 refers to, for example, a volume of the contact terminal 20.

In order to mount the contact terminal 20 having different sizes at the upper and lower portions 22 and 24 thereof to the integral socket body 10, a hole 40 corresponding to the size of the lower portion 24 of the contact terminal 24 should be formed on one surface of the socket body 10.

However, even if the contact terminal 20 can be mounted all at once through the hole 40 corresponding to the size of the lower portion 24 of the contact terminal 20, a gap may be generated due to the differences in the shapes and sizes of the hole 40 and the upper portion 22 of the contact terminal 20.

Since an interior of the socket body 10 may be exposed to the outside through the gap, water may penetrate into the portable terminal as well as into the socket body 10 through the gap when the portable terminal is submerged in water.

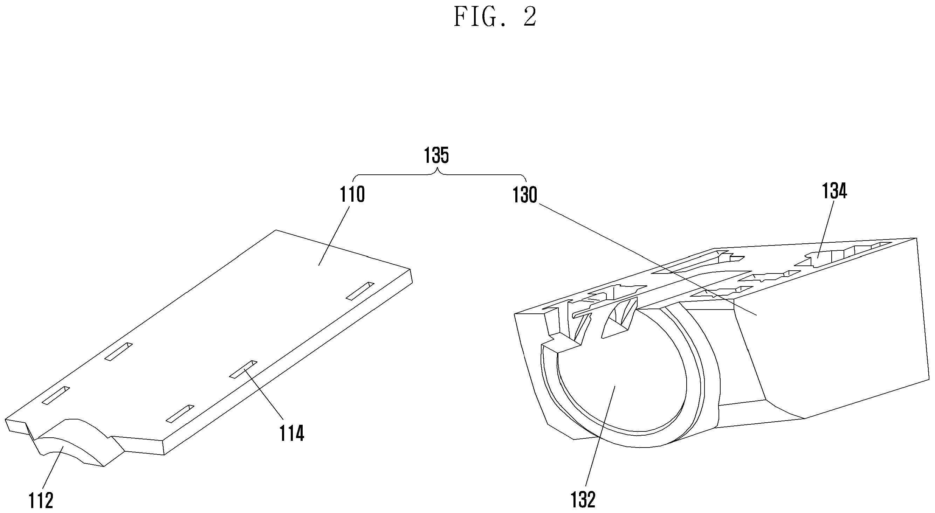

FIG. 2 schematically illustrates a separable socket body of an ear jack socket for a portable terminal in accordance with embodiments of the present disclosure.

Referring to FIG. 2, a separable socket body 135 of an ear jack socket for a portable terminal in accordance with the embodiments of the present disclosure includes an upper socket 110 and a lower socket 130.

The upper socket 110 and the lower socket 130 may be formed of at least one of heat-resistant plastic, Polycarbonate (PC), Polyethylene Terephthalate Glycol (PETG), polyethylene (PE), and polypropylene (PP), and may be molded through at least one process of extrusion, blow molding, injection molding, compression, and vacuum forming.

The upper socket 110 has a dome shape at an entrance portion 112 thereof along an outer circumference of an ear jack plug. The entrance portion 112 for insertion of the ear jack plug is a portion of a plug insertion hole.

A plurality of slits 114 for coupling contact terminals 140 to the upper socket 110 later are formed on one surface of the upper socket 110 spaced apart from each other by a predetermined separation. In certain embodiments, the slits 114 have the form of holes through which the contact terminals 140 pass through the upper socket 110 and have appropriate sizes for attachment to and engagement with the contact terminals 140.

One surface of the lower socket 130 is formed to be coupled to the upper socket 110 while facing the upper socket 110, and a portion 132 of the plug insertion hole for insertion of the ear phone plug is formed on a side surface of the lower socket 130.

A plurality of recesses 134 corresponding to the slits 114 formed on one surface of the upper socket 110 are formed on one surface of the lower socket 130 facing the socket 110.

The recesses 134 are formed such that the contact terminals 140 can be vertically inserted into the slits 114 and the recesses 134 at the same time and the contact terminals 140 can be attached to and engaged with the recesses 134. That is, the contact terminals 140 having passed through the slits 114 can be attached to and engaged with the recesses 134.

In accordance with the embodiments of the present disclosure, the upper socket 110 and the lower socket 130 of the socket body 135 are individually injection molded, and the slits 114 and the recesses 134 are formed such that the contact terminals 140 inserted into the upper socket 110 and the lower socket 130 at the same time can be attached to and engaged with the slits 114 and the recesses 134 according to the different shapes of the contact terminals 140, so that a gap is actually not generated between the socket 135 and the contact terminals 140.

That is, in accordance with the embodiments of the present disclosure, since the contact terminals 140 are attached and inserted into the upper socket 110 and the lower socket 130, by reducing the sizes of external holes, moisture can be prevented from penetrating into the portable terminal even when moisture penetrates through the ear jack socket.

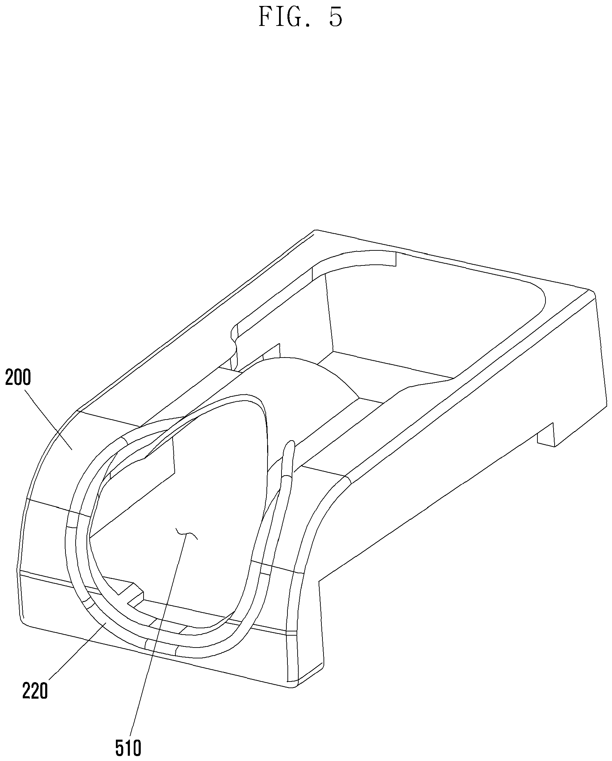

When the upper socket 110 and the lower socket 130 are coupled to each other, the portion 132 of the plug insertion hole of the lower socket 130 is coupled to a portion of the plug insertion hole formed at the entrance portion 112 of the upper socket 110 to completely form a plug insertion hole (see reference number 510 of FIG. 5).

The plug insertion hole (see reference number 510 of FIG. 5) can be closed by a separate lid, and can be opened by detaching the lid if necessary.

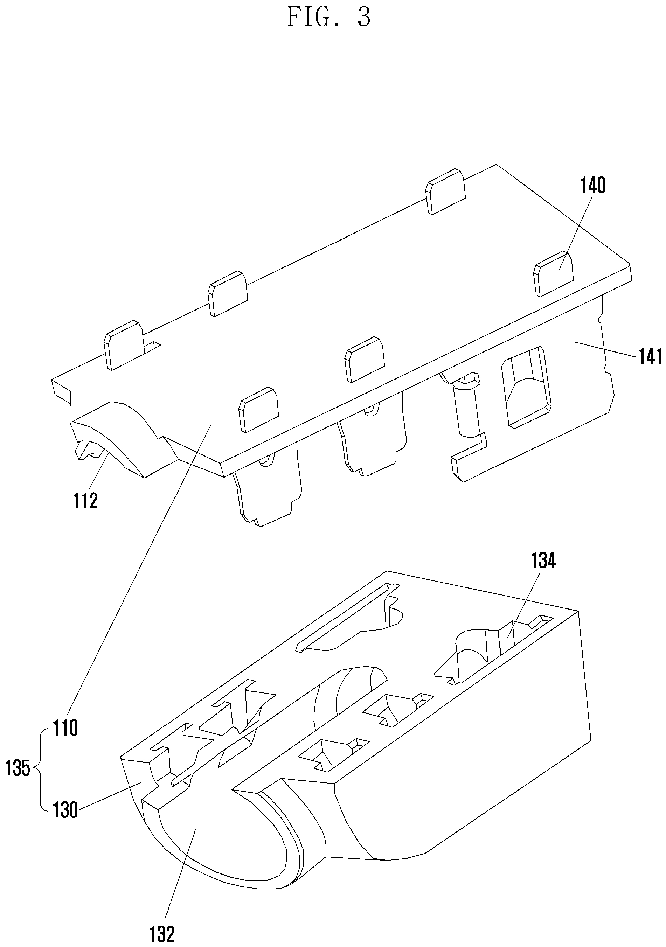

FIG. 3 illustrates perspective views of a process of coupling the separable socket body of the ear jack socket for a portable terminal in accordance with the embodiments of the present disclosure.

Referring to FIG. 3, the separable socket body 135 of the ear jack socket for a portable terminal in accordance with the embodiments of the present disclosure is formed by coupling the upper socket 110 and the lower socket 130 of the separable socket body 135, by assembling the contact terminals 140 in the slits 114 and the recesses 134 facing the slits 114, and by bonding the upper socket 110 and the lower socket 130.

It can be seen that in accordance with the embodiments of the present disclosure, sizes of holes for insertion of the contact terminals 140 can be reduced as compared with those of the socket body in FIG. 1 by individually injection molding the upper socket 110 and the lower socket 130, and by attaching and inserting the contact terminals 140 into the upper socket 110 and the lower socket 130. That is, since the slits 114 are formed to correspond to the sizes and shapes of the contact terminals 140, a gap is not generated between the contact terminals 140 and the socket body 135 due to the differences between the sizes and shapes thereof.

The contact terminals 140 are terminals for transmitting and receiving audio signals when the ear jack plug is coupled to the ear jack socket. That is, the contact terminals 140 are interfaces for communications between the circuit board of the portable terminal and the ear jack plug. For example, the contact terminals provide paths for transmitting a signal transmitted from an ear microphone of the ear phone to the circuit board. Also, the contact terminals 140 provide paths for transmitting a function sound, an effect sound, and a reception sound generated in the circuit board to the ear jack plug.

For this function, an upper portion of the contact terminal 140 passing through the corresponding slit 114 and protruding upwards extends to the inside of the portable terminal can electrically contact the printed circuit board (PCB). Thereto, a flexible printed circuit board or wiring such as a connection wire can be used.

A lower portion 141 of the contact terminal 140 exposed through a hole 138 formed in an inner wall of the corresponding recess 134 electrically contacts the ear jack plug. That is, the ear jack plug and the exposed portions of the contact terminals 140 directly contact each other through the holes 138 formed in the inner walls of the recesses 134 to be spaced apart from each other. Accordingly, the ear jack plug and an internal circuit of the portable terminal can be electrically connected to each other.

The portions where the contact terminals 140 and the slits 114 contact each other and the portions where the contact terminals 140 and the recesses 134 contact each other can be bonded by using an adhesive or double-sided tapes to reinforce bonding forces.

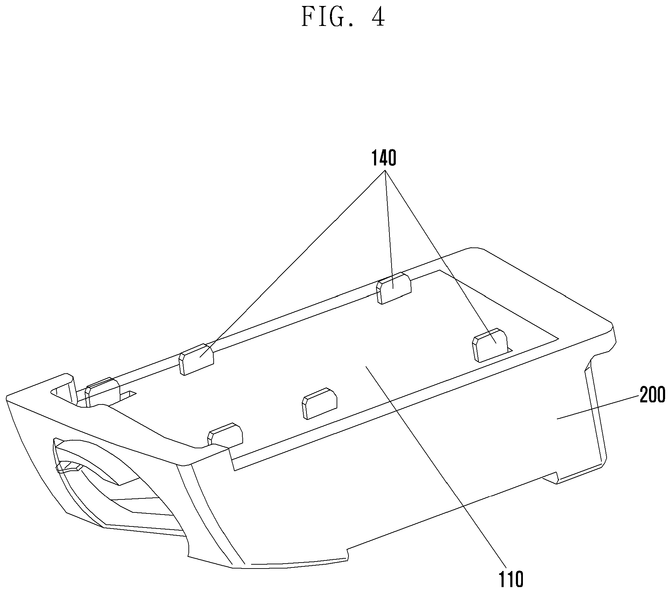

FIG. 4 schematically illustrates a structure in which a waterproof cover is injection molded together with the separable socket body of the ear jack socket for a portable terminal in accordance with an embodiment of the present disclosure. FIG. 5 schematically illustrates the waterproof cover according to the embodiment of the present disclosure.

Referring to FIGS. 4 and 5, the socket body 135 formed by assembling the upper socket 110 and the lower socket 130 and by engaging the contact terminals 140 is injection molded around to form the waterproof cover 200. That is, the waterproof cover 200 is attached to the socket body 135 by placing the socket body 135 into a mold in advance and by injection molding around the socket body 135.

The waterproof cover 200 encloses the socket body 135, and can prevent the socket body 135 from being contaminated or damaged by an external environment and can prevent water from penetrating into the interior of the portable terminal from the outside.

The waterproof cover 200 covers the socket body 135 except for the upper body 110 in which the contact terminals 140 pass through the slits 114 to be exposed to the outside, and the plug insertion hole 510 into which the ear jack plug is inserted, but the structure of the waterproof cover 200 is not limited thereto.

The waterproof cover 200 can be formed by inserting injection molding around the socket body 135 with liquid silicon rubber. An adhesive such as a primer can be applied on an outer surface of the socket body 135 to further increase attachment performance of the waterproof cover 200 and the socket body 135. an adhesive can be further added to the liquid silicon rubber. The integral ear jack socket is formed through the injection molding.

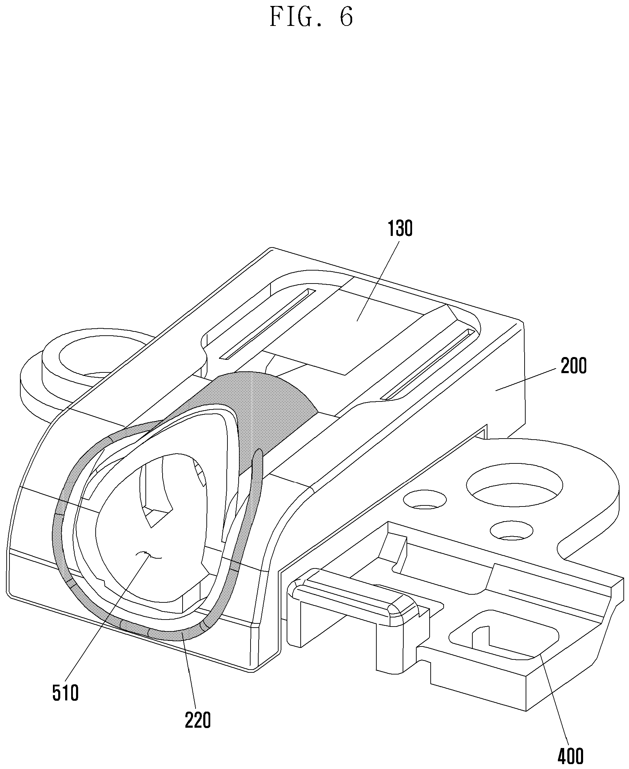

Referring to FIGS. 5 and 6, a circumference of the waterproof cover 200 adjacent to the plug insertion hole 510 further includes a convex portion 220 protruding by a predetermined height with respect to a surface of the waterproof cover 200. The convex portion 220 is formed of a resilient material such as silicon rubber.

Since the convex portion 220 is attached to an inner wall of the portable terminal by a resilient force while the waterproof cover 200 is mounted within the portable terminal, it can separate the socket body 135 from the outside and thus prevent moisture from being introduced into the socket body 135 when the portable terminal is submerged in water.

The convex portion 220 is formed along a circumference of the plug insertion hole 510 and can be formed to partially cover an outer surface of the lower socket 130 of the socket body 135.

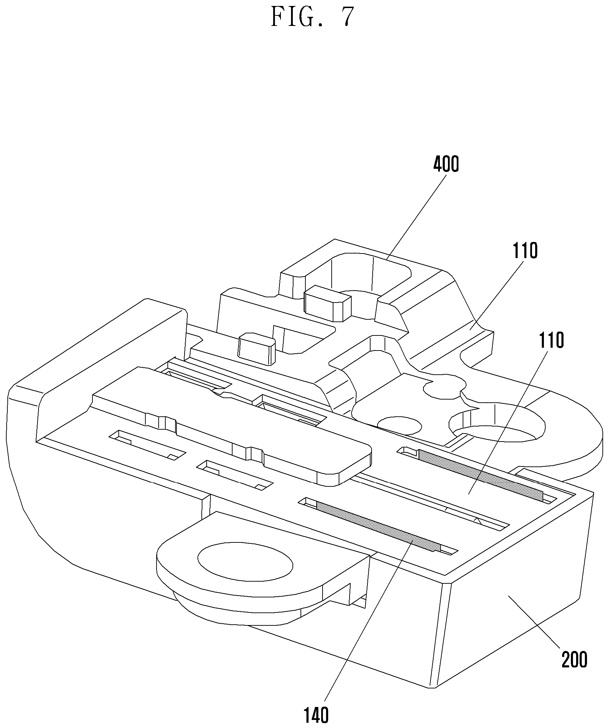

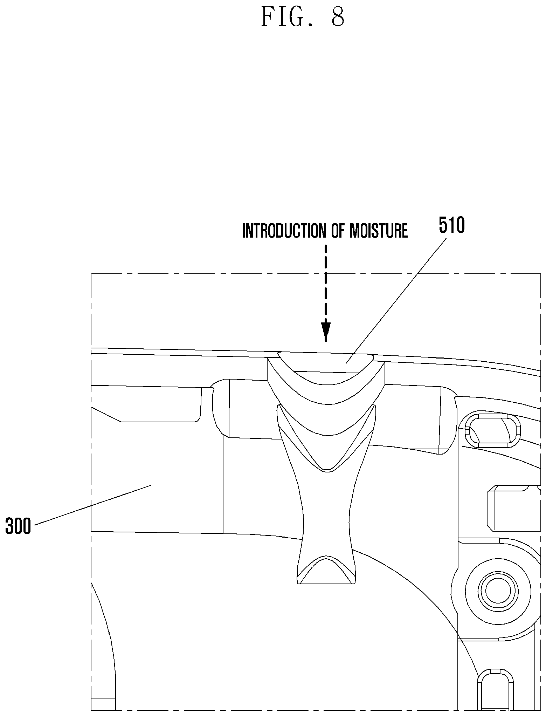

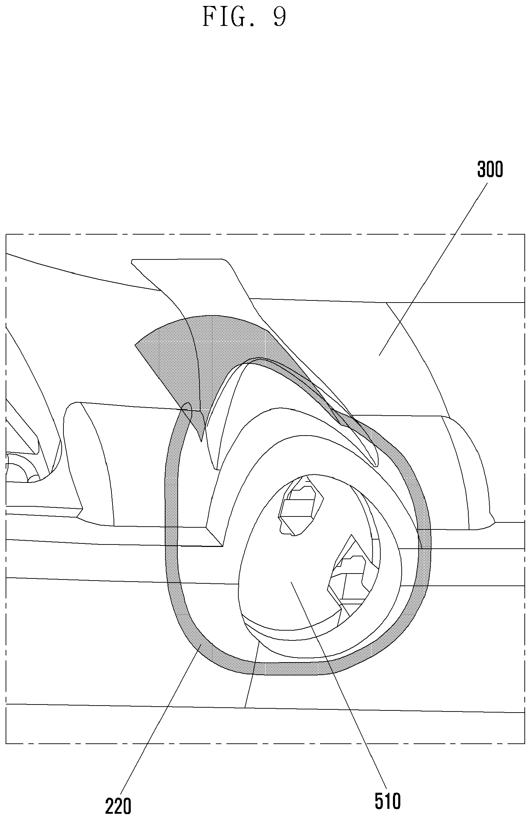

FIG. 6 illustrates a structure in which the waterproof cover is bonded to the separable socket body of the ear jack socket for a portable terminal in accordance with embodiments of the present disclosure. FIG. 7 illustrates a structure of the ear jack socket of FIG. 6 when viewed from the rear side. FIGS. 8 and 9 schematically illustrate a structure in which the ear jack socket is mounted within a portable terminal in accordance with the embodiment of the present disclosure.

The socket body 135 covered by the waterproof cover 200 as illustrated in FIGS. 6 and 7 is mounted to an interior of the portable terminal 300 as illustrated in FIG. 9. An entrance of the plug insertion hole 510 is mounted to be exposed to the outside.

The socket body 135 is injection molded around and is provided with the plug insertion hole 510 for insertion of the ear jack plug. The contact terminals 140 contacting the ear jack plug to transfer an electrical signal to an internal circuit of the portable terminal, but as illustrated in FIGS. 6 and 7, may be injection molded while a structure 400 for mounting other component elements in the portable terminal extends from a portion of the socket body 135.

As illustrated in FIG. 8 and 9, in the case where the socket body 135 is submerged in water, the socket body 135 can primarily prevent moisture from penetrating into the portable terminal 300 due to the attachment of the convex portion 220 and an inner wall of the portable terminal 300, and can secondarily prevent moisture from penetrating into the portable terminal 300 by individually injection molding the upper socket 110 and the lower socket 130, attaching and inserting the contact terminals 140 into the upper socket 110 and the lower socket 130, and accordingly reducing a size of an external hole.

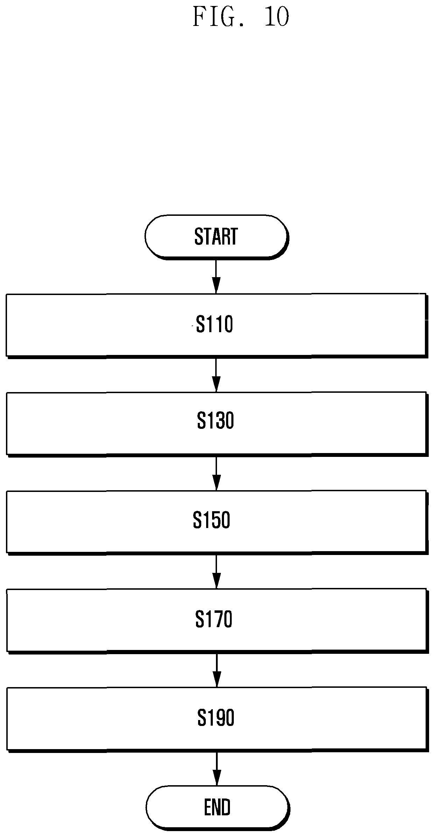

FIG. 10 illustrates a process of manufacturing a waterproof ear jack socket in accordance with an embodiment of the present disclosure.

Referring to FIGS. 10 and 2 to 5, first, in block S110, the upper socket 110 and the lower socket 130 for forming the socket body 135 having the plug insertion hole 510 into which the ear jack plug is inserted are individually injection molded. The upper socket 110 and the lower socket 130 can be formed of at least one of heat-resistant plastic, Polycarbonate (PC), Polyethylene Terephthalate Glycol (PETG), polyethylene (PE), and polypropylene (PP), and can be molded through at least one process of extrusion, blow molding, injection molding, compression, and vacuum forming. The upper socket 110 has a dome shape at the entrance portion 112 thereof along an outer circumference of an ear jack plug. The entrance portion 112 for insertion of the ear jack plug is a portion of a plug insertion hole 510.

Next, in block S130, at least one slit 114 is formed on one surface of the upper socket 110 such that a first portion of the contact terminal 140 can pass through the surface of the upper socket 110 to be exposed to the outside. Also, a recess for engaging a second portion 141 of the contact terminal is formed on one surface of the lower socket 130 facing the upper socket 110. Two or more slits 114 are spaced apart from each other by a predetermined separation in the form of a hole through which the contact terminal 140 passes, and have a size for attachment to and engagement with the contact terminal 140.

Next, in clock S150, the second portion 141 of the contact terminal is engaged with and assembled in the recess 134 by inserting the first portion 140 of the contact terminal 240 into the slit 114.

Next, in block S170, the socket body 135 is formed by bonding the upper socket 110 and the lower socket 130. The upper body 110 and the lower body 130 are bonded to each other by using a double-sided tape or an adhesive, but the present disclosure is not limited thereto.

Next, in block S190, the waterproof cover 200 is formed by insert injection molding around the socket body 135. That is, the socket body 135 is placed into the mold in advance to be insert injection molded around so that the waterproof cover 200 is attached to the socket body 135. The waterproof cover 200 prevents the socket body 135 from being contaminated or damaged by an external environment while enclosing the socket body 135 and can prevent water from penetrating into the portable terminal from the outside at the same time. The waterproof cover 200 covers the socket body 135 except for the upper socket 110 in which the contact terminals 140 pass through the slits 114 to be exposed and except for the plug insertion hole 510 into which the ear jack plug is inserted, but the present disclosure is not limited the structure.

The waterproof cover 200 can be formed by inserting injection molding around the socket body 135 with liquid silicon rubber. An adhesive such as a primer is applied on an outer surface of the socket body 135 to further increase attachment performance of the waterproof cover 200 and the socket body 135. An adhesive can be further added to the liquid silicon rubber. The integral ear jack socket can be formed through the injection molding.

In particular, a circumference of the waterproof cover 200 adjacent to the plug insertion hole 510 can further have a resilient structure protruding by a predetermined height to be attached to the inner wall of the portable terminal by a resilient force, thereby enhancing a waterproof effect.

Accordingly, in the case where the socket body is submerged in water, the socket body can primarily prevent moisture from penetrating into the portable terminal by separating the inner wall of the portable terminal and the ear jack socket structure from the outside, and can secondarily prevent moisture from penetrating into the portable terminal by individually injection molding the upper socket and the lower socket, attaching and inserting the contact terminals into the upper socket and the lower socket, and accordingly reducing a size of an external hole.

Although the present disclosure has been described with embodiments, various changes and modifications may be suggested to one skilled in the art. It is intended that the present disclosure encompass such changes and modifications as fall within the scope of the appended claims.

## Claims

1. A waterproof ear jack socket for a portable terminal comprising:
an upper socket (110) having at least one slit (114) formed to allow passage of a first portion of a contact terminal (140) through one surface of the upper socket (110) to be exposed to the outside wherein the at least one slit has an appropriate size for attachment to and engagement with the contact terminal (140);
a lower socket (130) having a recess (134) configured to engage a second portion of the contact terminal (140) on one surface thereof facing the upper socket, the lower socket being coupled to the upper socket to form a plug insertion hole (510) into which an ear jack plug can be inserted; and
a waterproof cover (200) formed by insert injection molding around a socket body (135) formed by bonding the upper socket and the lower socket and configured to prevent the socket body (135) from being contaminated or damaged by an external environment;
the waterproof ear jack socket being **characterized in that** the upper socket (110) and the lower socket (130) define separate parts of the entrance portion of the plug insertion hole (510) and **in that** the waterproof cover (200) has a convex portion (220) formed to protrude by a predetermined height at a circumference adjacent to an entrance portion (112, 132) of the plug insertion hole (510) and wherein the convex portion (220) is configured to attach to an inner wall of a portable terminal (300), within which the ear jack socket is mounted, by a resilient force and is formed of a resilient material.

2. The waterproof ear jack socket of claim 1, wherein the upper socket (110) has a structure configured to allow passage of the first portion of the contact terminal through the slit (114) while being attached to the slit (114).

3. The waterproof ear jack socket of claim 1, wherein the lower socket (130) has a structure in which the second portion of the contact terminal is configured to attach to and engage with the recess (134).

4. The waterproof ear jack socket of claim 1, wherein the upper socket (110) and the lower socket (130) are bonded to each other by one of: a double-sided tape and an adhesive.

5. The waterproof ear jack socket of claim 1, wherein the waterproof cover (200) is formed of liquid silicon rubber.

6. The waterproof ear jack socket of claim 1, wherein the recess (134) has a hole (138) configured to connect a portion of the inner wall of the lower socket (130) to the plug insertion hole (510).

7. A waterproof ear jack socket according to claim 1, wherein:
the socket body in which the upper socket and the lower socket are separately manufactured are coupled to each other to form the plug insertion hole (510) into which an ear jack plug can be inserted on a side surface thereof;
the waterproof cover enclosing the socket body and in which the convex resilient portion of a surface of the waterproof cover corresponding to a circumference of an entrance of the plug insertion hole (510) protrudes to be attached to an inner wall of a terminal by a resilient force; and
a contact terminal comprising the first contact terminal passing through at least one hole formed on an upper surface of the upper socket to be connected to a circuit board of a terminal, and the lower contact terminal is integrally formed with the upper contact terminal and configured for insertion into the recess formed in the lower socket to enable contact with the ear jack plug

8. The waterproof ear jack socket of claim 7, wherein the upper contact terminal is configured to pass through the hole of the upper socket (110) while being attached to an inner wall of the hole and the lower contact terminal is configured to insert into the recess (134) of the lower socket (130) while being attached to an inner wall of the recess.

9. The waterproof ear jack socket of claim 7, wherein the upper contact terminal and the lower contact terminal of the contact terminal (140) have different sizes.

10. The waterproof ear jack socket of claim 7, wherein the waterproof cover is configured to attach to the socket body except for an upper surface of the upper socket and an entrance of the plug insertion hole (510).

11. A method of manufacturing a waterproof ear jack socket for a portable terminal, the method comprising:
individually injection molding (S110) an upper socket and a lower socket for forming a socket body having a plug insertion hole (510) into which an ear jack plug is to be inserted;
forming (S130) at least one slit on one surface of the upper socket such that a first portion of a contact terminal passes through the surface of the upper socket to be exposed to the outside wherein the at least one slit has an appropriate size for attachment to and engagement with the contact terminal and forming a recess for engaging a second portion of the contact terminal on one surface of the lower socket facing the upper socket;
assembling (S150) the contact terminal such that the first portion of the contact terminal is inserted into the slit and the second portion of the contact terminal is engaged with the recess;
bonding (S170) the upper socket and the lower socket to form the socket body; the method being **characterized in that** the upper socket (110) and the lower socket (130) define separate parts of the entrance portion of the plug insertion hole (510) and in
inserting (S190) injection molding around the socket body to form a waterproof cover having a convex portion (220) formed to protrude by a predetermined height at a circumference adjacent to an entrance portion (112, 132) of the plug insertion hole (510) and configured to prevent the socket body from being contaminated or damaged by an external environment when the ear jack socket is mounted within a portable terminal.

12. The method of claim 11, wherein in the forming of the waterproof cover, the socket body is injection molded around such that the waterproof cover is attached to an outer circumference of the socket body except for the plug insertion hole (510) and one surface of the upper socket from which the contact terminal is exposed, wherein the waterproof cover is formed by inserting injection molding around the socket body with liquid silicon rubber.

13. The method of claim 12, wherein the forming of the waterproof cover comprises applying a primer on a surface of the socket body before the waterproof cover is injection molded.

14. The method of claim 11, wherein the forming of the waterproof cover further comprises forming a convex portion at a circumference of the waterproof cover adjacent to the plug insertion hole to separate a space of an inner wall of a terminal and the waterproof cover from the outside.

## Patentansprüche

1. Wasserdichte Ohrhörerstecker-Buchse für ein tragbares Endgerät, umfassend:
eine obere Buchse (110), die mindestens einen Schlitz (114) aufweist, der gebildet ist, um einen Durchgang eines ersten Abschnitts eines Kontaktanschlusses (140) durch eine Oberfläche der oberen Buchse (110) zu ermöglichen, die an die Außenseite ausgesetzt ist, wobei der mindestens eine Schlitz eine geeignete Größe zum Anbringen an und zum Eingreifen mit dem Kontaktanschluss (140) aufweist;
eine untere Buchse (130), die eine Aussparung (134) aufweist, die konfiguriert ist, um einen zweiten Abschnitt des Kontaktanschlusses (140) auf einer Oberfläche davon einzugreifen, die der oberen Buchse zugewandt ist, wobei die untere Buchse mit der oberen Buchse gekoppelt ist, um ein Steckereinführloch (510) zu bilden, in das ein Ohrhörerstecker eingeführt werden kann;
und eine wasserdichte Abdeckung (200), die durch Spritzformen um einen Buchsenkörper (135) gebildet ist, der durch Verbinden der oberen Buchse und der unteren Buchse gebildet und konfiguriert ist, um zu verhindern, dass der Buchsenkörper (135) durch eine äußere Umgebung verunreinigt oder beschädigt wird;
wobei die wasserdichte Ohrhörerstecker-Buchse **dadurch gekennzeichnet ist, dass** die obere Buchse (110) und die untere Buchse (130) separate Teile des Eingangsabschnitts des Steckereinführlochs (510) definieren und dass die wasserdichte Abdeckung (200) einen konvexen Abschnitt (220) aufweist, der gebildet ist, um um eine vorbestimmte Höhe an einem Umfang anliegend an einem Eingangsabschnitt (112, 132) des Steckereinführlochs (510) hervorzustehen, und wobei der konvexe Abschnitt (220) gebildet ist, um an einer Innenwand eines tragbaren Endgeräts (300), in dem die Ohrhörerstecker-Buchse montiert ist, durch eine elastische Kraft angebracht zu werden und er aus einem elastischen Material gebildet ist.

2. Wasserdichte Ohrhörerstecker-Buchse nach Anspruch 1, wobei die obere Buchse (110) eine Struktur aufweist, die konfiguriert ist, um einen Durchgang des ersten Abschnitts des Kontaktanschlusses durch den Schlitz (114) zu ermöglichen, während er an dem Schlitz (114) angebracht ist.

3. Wasserdichter Ohrhörerstecker-Buchse nach Anspruch 1, wobei der untere Sockel (130) eine Struktur aufweist, in der der zweite Abschnitt des Kontaktanschlusses konfiguriert ist, um an der Aussparung (134) angebracht zu werden und diese einzugreifen.

4. Wasserdichte Ohrhörerstecker-Buchse nach Anspruch 1, wobei die obere Buchse (110) und die untere Buchse (130) durch eines von Folgenden miteinander verbunden sind: ein doppelseitiges Klebeband und ein Klebstoff.

5. Wasserdichte Ohrhörerstecker-Buchse nach Anspruch 1, wobei die wasserdichte Abdeckung (200) aus flüssigem Silikonkautschuk gebildet ist.

6. Wasserdichte Ohrhörerstecker-Buchse nach Anspruch 1, wobei die Aussparung (134) ein Loch (138) aufweist, das konfiguriert ist, um einen Abschnitt der Innenwand der unteren Buchse (130) mit dem Steckereinführloch (510) zu verbinden.

7. Wasserdichte Ohrhörerstecker-Buchse nach Anspruch 1, wobei:
der Buchsenkörper, in dem die obere Buchse und die untere Buchse separat hergestellt sind, miteinander gekoppelt sind, um das Steckereinführloch (510) zu bilden, in das ein Ohrhörerstecker auf einer Seitenfläche davon eingeführt werden kann;
die wasserdichte Abdeckung, die den Buchsenkörper umschließt und in der der konvexe elastische Abschnitt einer Oberfläche der wasserdichten Abdeckung, die einem Umfang eines Eingangs des Steckereinführlochs (510) entspricht, hervorsteht, um durch eine elastischen Kraft an einer Innenwand eines Endgeräts angebracht zu werden;
und einen Kontaktanschluss, umfassend den ersten Kontaktanschluss, der durch mindestens ein Loch verläuft, das an einer oberen Fläche der oberen Buchse gebildet ist, um mit einer Leiterplatte eines Endgeräts verbunden zu werden, und der untere Kontaktanschluss einteilig mit dem oberen Kontaktanschluss gebildet und zum Einführen in die in der unteren Buchse ausgebildete Aussparung konfiguriert ist, um einen Kontakt mit dem Ohrhörerstecker zu ermöglichen.

8. Wasserdichte Ohrhörerstecker-Buchse nach Anspruch 7, wobei der obere Kontaktanschluss konfiguriert ist, um durch das Loch der oberen Buchse (110) zu verlaufen, während er an einer Innenwand des Lochs angebracht ist, und der untere Kontaktanschluss konfiguriert ist, um in die Aussparung (134) der unteren Buchse (130) eingeführt zu sein, während er an einer Innenwand der Aussparung angebracht ist.

9. Wasserdichte Ohrhörerstecker-Buchse nach Anspruch 7, wobei der obere Kontaktanschluss und der untere Kontaktanschluss des Kontaktanschlusses (140) unterschiedliche Größen aufweisen.

10. Wasserdichte Ohrhörerstecker-Buchse nach Anspruch 7, wobei die wasserdichte Abdeckung konfiguriert ist, um an dem Buchsenkörper angebracht zu sein, mit Ausnahme einer oberen Fläche der oberen Buchse und eines Eingangs des Steckereinführlochs (510).

11. Verfahren zum Herstellen einer wasserdichten Ohrhörerstecker-Buchse für ein tragbares Endgerät, wobei das Verfahren Folgendes umfasst:
individuelles Spritzformen (S110) einer oberen Buchse und einer unteren Buchse zum Bilden eines Buchsenkörpers, der ein Steckereinführloch (510) aufweist, in das ein Ohrhörerstecker eingeführt werden soll;
Bilden (S130) von mindestens einem Schlitz an einer Fläche der oberen Buchse, sodass ein erster Abschnitt eines Kontaktanschlusses durch die Fläche der oberen Buchse verläuft, die an die Außenseite ausgesetzt werden soll, wobei der mindestens eine Schlitz eine geeignete Größe zum Anbringen an und zum Eingreifen mit dem Kontaktanschluss aufweist und auf einer der der oberen Buchse zugewandten Fläche der unteren Buchse eine Aussparung zum Eingreifen eines zweiten Abschnitts des Kontaktanschlusses bildet;
Zusammensetzen (S150) des Kontaktanschlusses, sodass der erste Abschnitt des Kontaktanschlusses in den Schlitz eingeführt wird und der zweite Abschnitt des Kontaktanschlusses mit der Aussparung in Eingriff ist;
Verbinden (S170) der oberen Buchse und der unteren Buchse zu dem Buchsenkörper;
wobei das Verfahren **dadurch gekennzeichnet ist, dass** die obere Buchse (110) und die untere Buchse (130) separate Teile des Eingangsabschnitts des Steckereinführlochs (510) und beim Spritzformen (S190) um den Buchsenkörper definieren, um eine wasserdichte Abdeckung mit einem konvexen Abschnitt (220) zu bilden, der gebildet ist, um um eine vorbestimmte Höhe an einem Umfang anliegend an einem Eingangsabschnitt (112, 132) des Steckereinführlochs (510) hervorzustehen, und konfiguriert ist, um zu verhindern, dass der Buchsenkörper durch eine externe Umgebung verunreinigt oder beschädigt wird, wenn die Ohrhörerstecker-Buchse in einem tragbaren Endgerät montiert ist.

12. Verfahren nach Anspruch 11, wobei beim Bilden der wasserdichten Abdeckung der Buchsenkörper spritzgeformt wird, sodass die wasserdichte Abdeckung an einem äußeren Umfang des Buchsenkörpers angebracht ist, mit Ausnahme des Steckereinführlochs (510) und einer Fläche der oberen Buchse, von der der Kontaktanschluss ausgesetzt ist, wobei die wasserdichte Abdeckung durch Spritzformen um den Buchsenkörper mit flüssigem Silikonkautschuk gebildet ist.

13. Verfahren nach Anspruch 12, wobei das Bilden der wasserdichten Abdeckung ein Aufbringen einer Grundierung auf eine Fläche des Buchsenkörpers umfasst, bevor die wasserdichte Abdeckung durch Spritzformen hergestellt wird.

14. Verfahren nach Anspruch 11, wobei das Bilden der wasserdichten Abdeckung ferner ein Bilden eines konvexen Abschnitts an einem Umfang der wasserdichten Abdeckung anliegend an dem Steckereinführloch umfasst, um einen Raum einer Innenwand eines Endgeräts und der wasserdichten Abdeckung von der Außenseite zu trennen.

## Revendications

1. Prise d'écouteur imperméable pour terminal portable, comprenant :
une douille supérieure (110) ayant au moins une fente (114) formée pour permettre le passage d'une première partie d'une borne de contact (140) à travers une surface de la douille supérieure (110) pour être exposée à l'extérieur, dans laquelle la ou les fentes ont une taille appropriée pour permettre la fixation à et l'engagement avec la borne de contact (140) ;
une douille inférieure (130) ayant un creux (134) configuré pour s'engager avec une deuxième partie de la borne de contact (140) sur une surface de celle-ci faisant face à la douille supérieure, la douille inférieure étant couplée à la douille supérieure pour former un trou d'insertion de fiche (510) dans lequel une fiche de prise d'écouteur peut être insérée ;
et un couvercle imperméable (200) formé par insertion d'un moulage par injection autour d'un corps de douille (135) formé par collage de la douille supérieure et de la douille inférieure et configuré pour empêcher le corps de douille (135) d'être contaminé ou endommagé par un environnement extérieur ;
la prise d'écouteur imperméable étant **caractérisée en ce que** la douille supérieure (110) et la douille inférieure (130) définissent des parties séparées de la partie d'entrée du trou d'insertion de fiche (510) et **en ce que** le couvercle imperméable (200) a une partie convexe (220) formée pour dépasser d'une hauteur prédéterminée sur une circonférence contiguë à une partie d'entrée (112, 132) du trou d'insertion de fiche (510), et la partie convexe (220) étant configurée pour se fixer par une force élastique à une paroi intérieure d'un terminal portable (300), dans lequel est montée la prise d'écouteur, et étant réalisée en un matériau élastique.

2. Prise d'écouteur imperméable selon la revendication 1, dans laquelle la douille supérieure (110) a une structure configurée pour permettre le passage de la première partie de la borne de contact par la fente (114) tout en étant fixée à la fente (114).

3. Prise d'écouteur imperméable selon la revendication 1, dans laquelle la douille inférieure (130) a une structure dans laquelle la deuxième partie de la borne de contact est configurée pour se fixer à et s'engager avec le creux (134).

4. Prise d'écouteur imperméable selon la revendication 1, dans laquelle la douille supérieure (110) et la douille inférieure (130) sont collées l'une à l'autre par l'un de : une bande adhésive double face et un adhésif.

5. Prise d'écouteur imperméable selon la revendication 1, dans laquelle le couvercle imperméable (200) est formé de caoutchouc de silicone liquide.

6. Prise d'écouteur imperméable selon la revendication 1, dans laquelle le creux (134) a un trou (138) configuré pour relier une partie de la paroi intérieure de la douille inférieure (130) au trou d'insertion de fiche (510).

7. Prise d'écouteur imperméable selon la revendication 1, dans laquelle :
la douille supérieure et la douille inférieure réalisées séparément dans le corps de douille sont couplées l'une à l'autre pour former le trou d'insertion de fiche (510) dans lequel une fiche d'écouteur peut être insérée sur une surface dudit corps ;
le couvercle imperméable renfermant le corps de douille et dans lequel la partie élastique convexe d'une surface du couvercle imperméable correspondant à une circonférence d'une entrée du trou d'insertion de fiche (510) dépasse pour être fixée à une paroi intérieure d'un terminal par une force élastique ; et
une borne de contact comprenant la première borne de contact passant par au moins un trou formé sur une surface supérieure de la douille supérieure devant être connectée à une carte de circuits d'un terminal, et la borne de contact inférieure fait partie intégrante de la borne de contact supérieure et configurée pour être insérée dans le creux formé dans la douille inférieure pour permettre le contact avec la fiche d'écouteur.

8. Prise d'écouteur imperméable selon la revendication 7, dans laquelle la borne de contact supérieure est configurée pour passer par le trou de la douille supérieure (110) tout en étant fixée à une paroi intérieure du trou et la borne de contact inférieure est configurée pour être insérée dans le creux (134) de la douille inférieure (130) tout en étant fixée à une paroi intérieure du creux.

9. Prise d'écouteur imperméable selon la revendication 7, dans laquelle la borne de contact supérieure et la borne de contact inférieure de la borne de contact (140) ont des tailles différentes.

10. Prise d'écouteur imperméable selon la revendication 7, dans laquelle le couvercle imperméable est configuré pour se fixer au corps de douille à l'exception d'une surface supérieure de la douille supérieure et d'une entrée du trou d'insertion de fiche (510).

11. Procédé de fabrication d'une prise d'écouteur imperméable pour un terminal portable, le procédé comprenant :
le moulage par injection individuel (S110) d'une douille supérieure et d'une douille inférieure pour former un corps de douille ayant un trou d'insertion de fiche (510) dans lequel doit être insérée une fiche d'écouteur ;
le formage (S130) d'au moins une fente sur une surface de la douille supérieure de telle sorte qu'une première partie d'une borne de contact passe à travers la surface de la douille supérieure pour être exposée à l'extérieur, la ou les fentes ayant une taille appropriée pour la fixation à et l'engagement avec la borne de contact et
le formage d'un creux pour l'engagement d'une deuxième partie de la borne de contact sur une surface de la douille inférieure faisant face à la douille supérieure ;
l'assemblage (S150) de la borne de contact de telle sorte que la première partie de la borne de contact soit insérée dans la fente et que la deuxième partie de la borne de contact soit engagée avec le creux ;
le collage (S 170) de la douille supérieure et de la douille inférieure pour former le corps de douille ;
le procédé étant **caractérisé en ce que** la douille supérieure (110) et la douille inférieure (130) définissent des parties séparées de la partie d'entrée du trou d'insertion de fiche (510) et
l'insertion (S190) d'un moulage par injection autour du corps de douille pour former un couvercle imperméable ayant une partie convexe (220) formée pour dépasser d'une hauteur prédéterminée sur une circonférence contiguë à une partie d'entrée (112, 132) du trou d'insertion de fiche (510) et configurée pour empêcher le corps de douille d'être contaminé ou endommagé par un environnement extérieur lorsque la prise d'écouteur est montée à l'intérieur d'un terminal portable.

12. Procédé selon la revendication 11, dans lequel, dans le formage du couvercle imperméable, le corps de douille est moulé par injection de telle sorte que le couvercle imperméable est fixé à une circonférence extérieure du corps de douille à l'exception du trou d'insertion de fiche (510) et d'une surface de la douille supérieure à partir de laquelle la borne de contact est exposée, le couvercle imperméable étant formé par insertion d'un moulage par injection autour du corps de douille avec du caoutchouc de silicone liquide.

13. Procédé selon la revendication 12, dans lequel le formage du couvercle imperméable comprend l'application d'un apprêt sur une surface du corps de douille avant le moulage par injection du couvercle imperméable.

14. Procédé selon la revendication 11, dans lequel le formage du couvercle imperméable comprend en outre le formage d'une partie convexe sur une circonférence du couvercle imperméable contiguë au trou d'insertion de fiche pour séparer un espace d'une paroi intérieure d'un terminal et le couvercle imperméable de l'extérieur.
